# EUROPÄISCHE PATENTSCHRIFT

(11) **EP 2 932 615 B1**
(45) Veröffentlichungstag und Bekanntmachung des Hinweises auf die Patenterteilung: **21.03.2018**
(21) Anmeldenummer: 13814503.2
(22) Anmeldetag: 17.12.2013
(51) Int. Cl.: H04B 5/00, H04L 12/40, H01B 11/22, H01Q 13/20

(54) **TELEKOMMUNIKATIONSSYSTEM**
TELECOMMUNICATION SYSTEM
SYSTÈME DE TÉLÉCOMMUNICATION

(30) Priorität: 17.12.2012 CH 28332012
(43) Veröffentlichungstag der Anmeldung: 21.10.2015
(73) Patentinhaber: Calibo Innovation AG, 8853 Lachen (CH)
(72) Erfinder: SCHOCH, Reto, CH-5044 Schlossrued (CH)
(74) Vertreter: Veni Swiss & European Patent Attorneys
(86) Internationale Anmeldenummer: PCT/EP2013/076884
(87) Internationale Veröffentlichungsnummer: WO 2014/095849

(56) Entgegenhaltungen:
- DE-A1- 2 048 849
- DE-A1- 2 835 241
- "GSM-R Project Tunnel System Guidelines rev03D", , 17. März 2004 (2004-03-17), XP055107259, Gefunden im Internet: URL:http://trv.jbv.no/tidligere-utgaver/Ga mmel versjon JD5xx 0101 2010/Tele/JD 560/Vedlegg/T6009f00.pdf [gefunden am 2014-03-12]

## Beschreibung

### Technisches Gebiet

Die vorliegende Erfindung betrifft ein Telekommunikationssystem für die Versorgung von Verkehrsstrecken.

### Stand der Technik

"GSM-R Project Tunnel System Guidelines rev03D", 17. März 2004 (2004-03-17), XP055107259, beschreibt ein System, in welchem ein oder mehrere Remote Units (Fibre Optical Repeater, MOR300BP) für die drahtlose Telekommunikation in einem Tunnel sorgen. Die Remote Units können je nach Bedarf entweder an RF-Antennen oder an Strahlkabeln angeschlossen werden.

DE 2835241 beschreibt ein strahlendes Kabel, das aus einem strahlenden Leiter für die Telekommunikation, einem Aussenmantel, eine oder mehrerer Lichtleitfasern in einem Kunststoffschlauch besteht. Blindelemente können als Zugentlastungselemente dienen. In der Patentschrift DE 2835241 sind keine Stromleiter beschrieben.

WO 2011/162916 beschreibt eine Befestigungslasche für strahlende Kabel und umfasst mehrere Bohrungen für koaxiale Kabel und/oder für Kabel für die Stromversorgung und/oder für Lichtwellenleitern. Die obige Kombination kann mit einem Befestigungselement ergänzt werden. WO 2011/162916 beschreibt in keiner Weise die Kombination von allen obigen Elementen im Sinne von einem einheitlichen Telekommunikationskabel.

EP 0743698 beschreibt eine Übertragungsvorrichtung für verkehrstechnische Kommunikationssysteme, insbesondere für den Datenaustausch zwischen einer erdgebundenen Kommunikationseinheit, wie einer Leitstelle, und einem Schienenfahrzeug mittels eines strahlenden Koaxialkabels. In der Patentschrift wird die Kombination eines strahlenden Kabels mit einem Stromversorgungselement beschrieben. EP 0743698 beschreibt die Montage eines Telekommunikationskabels entlang der Geleise, jedoch in keiner Weise die Kombination eines Kommunikationskabels mit einem Lichtwellenleiter.

### Kurze Zusammenfassung der Erfindung

Die Versorgung der Verkehrsstrecken (Bahnstrecken) mit Telekommunikationsdiensten basiert heute in der Regel über Mobilfunknetze mittels Mobilfunkantennen. Die Antennen werden so eingerichtet, dass die Anordnung in Anbetracht der Geographie und der gebauten Zonen eine bestflächendeckende Abdeckung des Geländes sicherstellt. Verbunden mit sogenannten Basisstationen haben solche Antennen eine breite Abdeckung und sind in der Lage, mehrere Mobilgeräte zu versorgen. Übliche Telekommunikationssysteme wie DMR (in der Bandbreite von 160 MHz oder 450 MHz), POLYCOM (380-400MHz), TETRA (450 MHz), GSM (900 MHz, 1800 MHz), GSM-R (900 MHz), UMTS (2100 MHz), WLAN (2400 MHz), LTE etc. werden über solche Basisstationen gesendet resp. empfangen und sowohl für einen privaten als auch für einen professionellen Einsatz betrieben. Man denke beispielsweise an GMS-R für den Betrieb von Bahnfunknetzen.

Solche Telekommunikationsnetze mit Antennen weisen einige Nachteile auf. Einerseits werden die gesendeten Leistungen durch die Verordnung über den Schutz vor nichtionisierender Strahlung (NISV) eingeschränkt, was zur Vermehrung der Antennen und zur Erhöhung der Investitions- und Betriebskosten führt. Anderseits strahlen die Antennen trotz Richtwirkung immer relativ breit, was im Falle der Versorgung von Bahnstrecken nicht unbedingt sinnvoll ist, da sich die Passagiere und das Personal im Zug auf der Bahnstrecke befinden. Weiter bedingt der Bau von Antennen ein aufwändiges Baueingabeverfahren, welches zu zusätzlichen Kosten führen und im Falle von Einsprachen sehr lange dauern kann. Weiter können Mobilfunkantennen nicht besonders ästhetisch sein, was in bestimmten, beispielsweise touristischen Gegenden, störend wirken kann. Weiter können die Umgebungsverhältnisse, wie hohe Gebäude, Seen, Galerien, Tunnels, Kurven, Bergstrecken usw. die Qualität der Funkdienste erschweren.

Es ist eine Aufgabe dieser Erfindung, eine neue und bessere Vorrichtung vorzuschlagen, welche es ermöglicht, den Betrieb von einem Telekommunikationssystem entlang von Eisenbahnstrecken aufzusetzen.

Gemäss der vorliegenden Erfindung werden diese Ziele insbesondere durch die Elemente des kennzeichnenden Teiles des unabhängigen Anspruchs 1 erreicht. Weitere vorteilhafte Ausführungsformen gehen ausserdem aus den abhängigen Ansprüchen 2 bis 15 und der Beschreibung hervor.

Insbesondere werden diese Ziele durch die Erfindung dadurch erreicht, dass ein strahlendes Telekommunikationskabel bestehend aus einem Strahlkabel zur Übertragung der Funkdienste mit den Mobilstationen der Teilnehmer, einem Leerrohr, in dem einen oder mehreren Lichtwellenleiter zur Übertragung der Daten zwischen einer Mastereinheit (Haupteinheit) und entsprechender Ferneinheit, mindestens einem Element für die Stromversorgung zur Leistungsversorgung der technischen Vorrichtungen wie Repeater, Überwachungs- und Steuerungsanlagen usw., einem Tragelement zur Verstärkung des Telekommunikationskabels und einem Mantel bzw. Halteprofil zum Zusammenhalten der obigen Komponenten, entlang einer Verkehrsstrecke montiert ist.

Ein weiteres Ziel der Erfindung besteht darin, ein Gesamtsystem für die Versorgung von Verkehrsstrecken mit Telekommunikationsdiensten vorzuschlagen.

### Kurze Beschreibung der Figuren

Die Erfindung wird nachfolgend anhand eines Ausführungsbeispiels der Erfindung, das in der Zeichnung dargestellt ist, näher erläutert. Es zeigt:
Fig. 1 ein strahlendes Telekommunikationskabel für das erfindungsgemässe Kommunikationssystem;
Fig. 2 einen idealen und realen Empfangspegel mit Antennen auf hohen Masten aus dem Stand der Technik (schematische Darstellung);
Fig. 3 einen idealen und realen Empfangspegel mit einem erfindungsgemässen strahlenden Kabel (schematische Darstellung);
Fig. 4 das strahlende Feld mit einem Beispiel davon, wie ein strahlendes Telekommunikationskabel an den Masten erfindungsgemäss montiert werden kann;
Fig. 5 ein Blockschema für das erfindungsgemässe Telekommunikationssystem;
Fig. 6 ein grobes Blockschema für einen Repeater des erfindungsgemässen Telekommunikationssystems.

### Realisierungsvarianten der Erfindung

Ein beispielhaftes Telekommunikationssystem für die Versorgung von Bahnstrecken wird beschrieben. Es umfasst ein strahlendes Telekommunikationskabel, das der Bahnstrecke entlang verlegt ist. Die ganze Bahnstrecke wird in Segmente unterteilt, welche je nach Funktechnologie, die zur Anwendung kommen, von 10m, 20m bis mehrere Kilometer betragen können. Die Segmente sind über Repeater zur Verstärkung des Signals verbunden. Jedes Segment ist mit einer oder mehreren Basisstationen zur Übertragung der Telekommunikationsdienste verbunden. Somit können z.B. geografisch schwierige Strecken optimal versorgt werden. Durch die unmittelbare Nähe des strahlenden Telekommunikationskabels 1 zur Bahnkomposition, kann die Leistung auf einem Minimum gehalten werden und wird nicht durch die NIS-Verordnung beschränkt, was zur Minimierung eines Prozessrisikos führen kann. Somit ist kein kompliziertes Bewilligungsverfahren notwendig. Ein Vorteil vom vorgeschlagenen strahlenden Telekommunikationssystem liegt auch darin, dass das System kompakt und geschlossen ist und ein integriertes System bildet, welches alle vorteilhaft zum Betrieb nötigen Elemente in sich trägt. In diesem Dokument wird das Beispiel einer Bahnstrecke verwendet, wobei die Erfindung sich auch für andere Arten von Verkehrsstrecken eignet, wie zum Beispiel Autobahnstrecken.

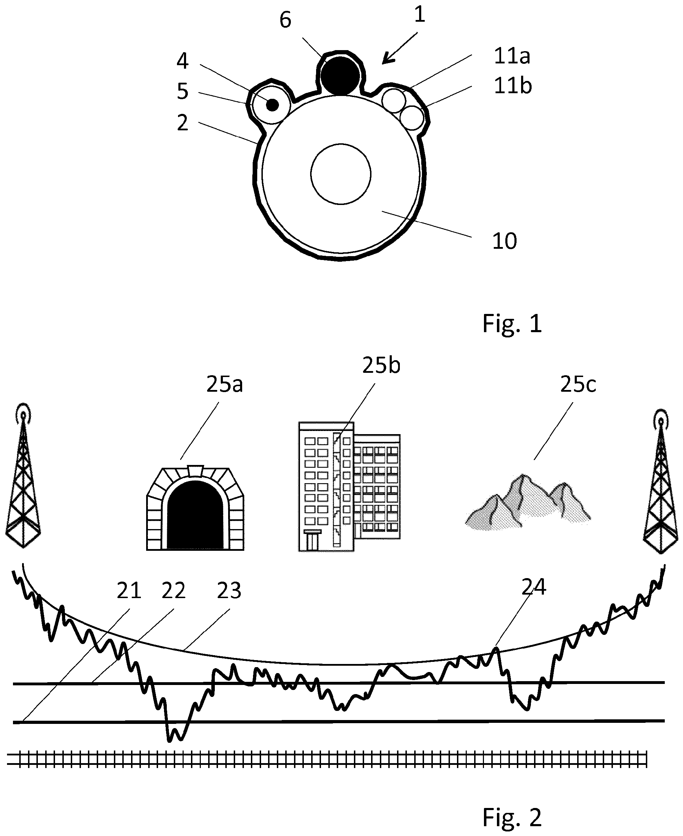

Wie in der Fig. 1 dargestellt, umfasst ein strahlendes Telekommunikationskabel 1 einen Strahlkabel 10, ein Leerrohr 5 für die Zuführung eines oder mehreren Lichtwellenleiter 4 zur Übertragung der Telekommunikation und mindestens ein Element 11 für die Stromversorgung. Während des Herstellungsprozesses kann der Strahlkabel 10 mit dem Leerrohr 5 und dem mindestens ein Element 11 für die Stromversorgung mittels einem Mantel 2 zusammengehalten werden. Zum Verlegen der Lichtwellenleiter 4 ins Leerrohr 5 können sie geblasen werden. Das Leerrohr 5 kann sich ausserhalb des Strahlkabels 10 oder im Dielektrikum des Strahlkabels 10 befinden. Das Leerrohr 5 kann innerhalb des Tragelementes 6 sein. Solche Konfigurationen vereinfachen die Produktion komplexer Telekommunikationskabel 1.

In einer Realisierungsvariante umfasst das strahlende Telekommunikationskabel 1 zusätzlich ein Tragelement 6, beispielsweise ein Tragseil, das im Mantel bzw. Halteprofil 2 mit den anderen Elementen zusammen gehalten wird, zur Verbesserung der mechanischen Eigenschaften, wie die Steifigkeit, die Zugfähigkeit, der Widerstand gegen Torsion usw., des strahlenden Telekommunikationskabels 1. Der Vorteil dieser Realisierungsvariante liegt darin, dass die Montage des strahlenden Telekommunikationskabels 1 einfacher ist. Die Funktion des Tragelementes 6 im strahlenden Telekommunikationskabels 1 kann mittels eines einzigen Tragseil 6 realisiert sein oder über ein Mehrfach von Tragseilen im strahlenden Telekommunikationskabels 1 aufgeteilt sein. Je nach Ausführung kann das Tragelement 6 aus Metall wie Stahl oder aus Kunststoff, beispielsweise aus synthetischen Aramid, bestehen. Je nach Ausführung kann das Tragelement 6 drahtförmig oder folienförmig sein. Je nach Ausführung kann das Tragelement 6 im strahlenden Telekommunikationskabel 1 so ausgelegt sein, dass zusätzlich zur Tragfunktion eine Abschirmung gewisser Stellen wie das Stromversorgungselement 11a, 11b realisiert werden kann. Je nach Ausführung kann das Tragelement 6 im Dielektrikum des Strahlkabels 10 versorgt sein.

In einer Realisierungsvariante wird der Mantel 2 zum Zusammenhalten der verschiedenen Komponenten über die ganze Kabellänge angebracht. Je nach Ausführung kann der Mantel 2 über die Komponenten gezogen und dank einer thermischen Behandlung geschrumpft werden. Je nach Ausführung kann der Mantel 2 als Band über die Komponenten des Kabels gewickelt werden. Je nach Ausführung kann der Mantel 2 die Komponenten des Kabels über bestimmte Segmente zusammenhalten, sodass andere Segmente des Kabels unbemantelt bleiben.

Der Mantel 2 bildet jedoch nur eine Art von Halteprofil, welches zum Zusammenhalten der Kabelkomponenten eingesetzt werden kann. In einer anderen Variante kann das Halteprofil 2 als ein extrudiertes, längliches Profil gebildet werden, etwa aus einem flexiblen polymerischen Material. In diesem Fall kann das Halteprofil mit Leerräume für die jeweiligen Kabelkomponenten versehen werden. Alternativ kann das Halteprofil aus mehreren diskreten Abstandhaltevorrichtungen gebildet werden, welche derart gebildet sind, dass sie die verschiedenen Kabelkomponenten in ihrer gewünschten Anordnung mit den jeweiligen geplanten Zwischenabständen an eine bestimmte Stelle entlang des Kabels halten.

Am Beispiel der Fig. 1 wird ein erfindungsgemässes strahlendes Telekommunikationskabel 1 dargestellt. Das Kabel besteht aus einem Strahlkabel 10, auch strahlendes Kabel, Leckkabel oder Schlitzkabel genannt, das als langgestreckte Antenne verwendet wird, zum Beispiel für Rundfunk-, Mobilfunk- oder WLAN-Signale. Dieses Kabel kann ein Koaxialkabel mit kleinen Schlitzen oder Öffnungen im Aussenleiter (Schirm) sein, durch die ein Hochfrequenz-Signal über die ganze Länge des Kabels abgestrahlt oder aufgenommen werden kann. Durch Strahlkabel können insbesondere lange Bereiche gleichmässig und kostengünstig mit Funkdiensten und geringer Leistung versorgt werden. Je nach Funkdienst wie DMR, TETRA, GSM, GSM-R, UMTS, WLAN oder LTE müssen möglicherweise mehrere Strahlkabel 10 verwendet werden. Je nach Ausführung kann das Strahlkabel aus einem Stromleiter, einem Dielektrikum und einem Aussenleiter bestehen.

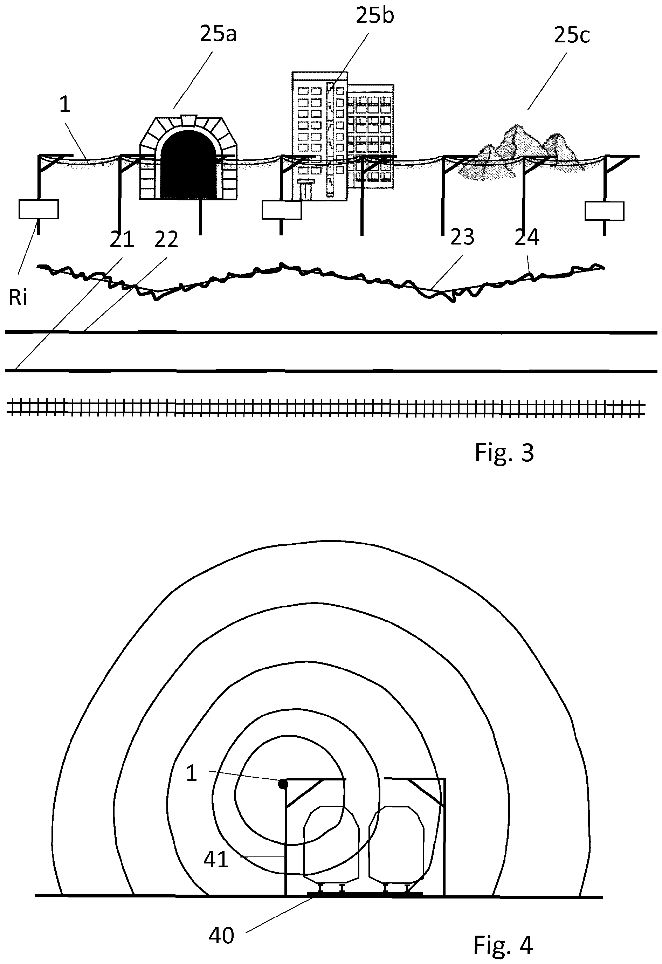

In einer Realisierungsvariante wird das strahlende Telekommunikationskabel 1 zwischen den Schienen 40, wie in der Fig. 4 dargestellt, verlegt. Dies hat den Vorteil, dass das strahlende Kabel in einer gut geschützten Zone liegt und dass die Installationskosten gering sind. Dies ist besonders vorteilhaft, wenn die Lokomotiven und die Wagen der Bahnkomposition mit einem Antennenteil für die Kommunikation unter dem Körper ausgerüstet sind. Diese Realisierungsvariante hat auch den Vorteil, dass die Versorgung von schwierigen Strecken wie Bergstrecken, Seestrecken möglich und qualitativ gut ist.

In einer Realisierungsvariante wird das strahlende Telekommunikationskabel 1 mit dem Erdseil an den Fahrleistungsmasten 41, wie auf Fig. 4 dargestellt, montiert. Dies hat den Vorteil, dass die Streckensperrung für die Montage des strahlenden Telekommunikationskabels 1 auf ein Minimum gehalten werden kann. Diese Realisierungsvariante hat auch den Vorteil, dass die Versorgung von schwierigen Strecken wie Bergstrecken, Seestrecken möglich und qualitativ gut ist.

Das integrierte Telekommunikationskabel kann also vorzugsweise von bestehenden Fahrleitungsmasten gehalten bzw. suspendiert werden, und zwar z.B. in 5m Höhe. Gemäss einer weiteren Variante kann das Kabel jedoch tiefer verlegt werden, ohne die Übertragungseffizienz an den Verkehrsteilnehmenden (z.B. Zugpassagiere) zu beeinträchtigen. Beispielsweise kann das Kabel an einer geeigneten Struktur wie etwa Pfosten bzw. einem Zaun neben dem Geleise, in etwa. 1m bis 2m Höhe befestigt werden. An Bahnhöfen kann das Kabel entlang des Dachs bzw. des Bahnsteigs verlegt werden.

In einer Realisierungsvariante wird das strahlende Telekommunikationskabel 1 ohne Verbindung mit dem Erdseil an den Fahrleistungsmasten 41 montiert. Dies hat den Vorteil, dass die Streckensperrung für die Montage des strahlenden Telekommunikationskabels 1 auf ein Minimum gehalten werden kann und keinerlei Beeinträchtigung des Erdseils vorhanden ist.

Generell gesehen können alle Arbeiten an den Repeatern Ri und am strahlenden Telekommunikationskabel 1, wie Wartung etc., ausserhalb des Gefahrenbereiches ausgeführt werden was zur Optimierung des Bahnbetriebs führt. Nur bei der initialen Montage des strahlenden Telekommunikationskabels 1 soll die Strecke gesperrt werden.

Das strahlende Telekommunikationskabel 1 kann für die Versorgung der Bahnstrecken sowohl im freien Gelände als auch in Tunnels eingesetzt werden. Das System ist für die Versorgung von kleinen Bahnhöfen auch sehr gut geeignet. Somit stellt ein einheitliches System eine technologische Kontinuität über längere Distanzen oder gemischten Umgebungen sicher, was zu tieferen Investitions- und Betriebskosten führen kann.

Basisstationen zur Fernübertragung der Funkdienste können dank den Repeatern mit einem Abstand von ca. 15 km bis 30 km, zum Beispiel, abhängig vom zum Einsatz kommenden Funkdienst und seiner Frequenz, zueinander und somit in den Bahnhöfen eingerichtet werden, was für den Betrieb und die Sicherheit vorteilhaft ist.

Um ein MIMO (Multiple Input, Multiple Output) Telekommunikationssystem einzurichten, können z.B. zwei oder vier Strahlerkabel entlang der Bahnstrecke parallel verlegt werden, und zwar vorzugsweise zwischen 20cm und 40cm voneinander entfernt. In diesem Fall kann ein oder mehrere von diesen Kabeln ein wie oben geschrieben integriertes Telekommunikationskabel sein.

Bei einem Unterbruch des erfindungsgemässen Telekommunikationssystems weist das oben beschriebene Telekommunikationssystem einige Vorteile auf. Im Falle eines Unterbruchs, verursacht z.B. durch einen auf das Geleise gestürzten Baumes, eines Steinrutsches in bergigen Gebieten oder einer Entgleisung, kann das Telekommunikationssystem unterbrochen werden, indem ein Segment des strahlenden Telekommunikationskabels 1 unterbrochen wird. Durch Überwachung des strahlenden Telekommunikationskabels durch Aussendung eines Pilottones, durch Abmessung der Impedanz oder des Wiederstandes im Kern des Strahlkabels oder durch Abmessung der Dämpfung in den Lichtwellenleitern 4 kann ein Unterbruch detektiert und geortet werden, und mittels eines Relais im Repeater Ri kann eine kleine Notantenne 59 aktiviert werden, welche im betroffenen Segment die Funkversorgung sicherstellt. Somit kann beispielsweise eine Alarmierung durch den Lokführer bei einer Entgleisung gemacht werden. Sofern zwei Lichtwellenleitern 4a, 4b im Rohr 5 für Lichtwellenleitern des strahlenden Telekommunikationskabels verlegt sind, kann der eine Lichtwellenleiter an der optischen Mastereinheit 55 und der andere Lichtwellenleiter an der optischen Mastereinheit 58 angeschlossen sein. Somit kann der Betrieb infolge eines Unterbruchs entweder von der optischen Mastereinheit 55 oder von der optischen Mastereinheit 58, also von der einen Seite oder von der anderen sichergestellt werden.

Die Fig. 2 zeigt den idealen und realen Empfangspegel entlang einer Bahnstrecke im Falle einer Versorgung mit Antennen auf hohen Masten. Die Antennen aus Mobilfunknetzen können je nach Geografie und angebotenen Funkdiensten beispielsweise 2 bis 10 km entfernt sein. Die Antennen versorgen die Gegend mit idealem Empfangspegel 23, der vorzugsweise oberhalb vom minimal geforderten Empfangspegel 22 liegt. Dieser minimal geforderte Empfangspegel 22 liegt oberhalb des Empfangspegels für die Systemgrenze. Nun können künstliche oder natürliche Hindernisse eine negative Auswirkung auf die Versorgung, eine sog. Unterversorgung, bewirken. Beispielsweise kann der effektive Empfangspegel 24 in Tunnels 25a, in der Nähe von Hochhäusern 25b, in schwierigen geografischen Terrains 25c wie Täler, Kurven usw. unterhalb des Empfangspegels für die Systemgrenze fallen, was zu einem Kommunikationsunterbruch zwischen dem Mobilfunknetz und der jeweiligen Mobilstation führen kann.

Die Fig. 3 zeigt den idealen und realen Empfangspegel entlang einer Bahnstrecke im Falle einer Versorgung mit dem erfindungsgemässen Kommunikationssystem. Ein strahlendes Telekommunikationskabel 1 wird an den Fahrleitungsmasten 41 montiert und Repeater Ri werden je nach Geografie und zur Anwendung kommendem Funkdienst zum Beispiel jeden Kilometer an einem Fahrleitungsmast 41 angebracht. Bedingt durch den beinahe regelmässigen Abstand zwischen dem strahlenden Telekommunikationskabel 1 und der nichtdargestellten Mobilstationen der Passagiere oder Bahnangestellten, erfolgt eine sehr stabile Kommunikationsversorgung, indem der reale Empfangspegel 24 mit dem idealen Empfangspegel 23 beinahe übereinstimmen und eindeutig oberhalb des min. geforderten Empfangspegel 22 liegen, und dies unabhängig von den natürlichen oder künstlichen Hindernissen 25.

Am Beispiel der Fig. 4 wird nun das elektrische Feld, das vom strahlenden Telekommunikationskabel 1 erzeugt wird, aufgezeigt. In dieser Konfiguration wird das strahlende Telekommunikationskabel 1 mit dem Erdseil an einem Fahrleitungsmast 41 montiert. Ersichtlich ist die gute Abdeckung beider Bahnkompositionen der zwei nebeneinander stehenden Bahnen, dies mit geringeren Feldern gegenüber nicht dargestellten, herkömmlichen Mobilfunkantennen. Eine gute Abdeckung wird auch mit dem Verlegen eines strahlenden Telekommunikationskabels entlang den Schienen 40 erreicht.

Wenn das Telekommunikationskabel 1 neben dem Geleise verlegt wird, so kann es so gebildet sein, dass die Strahleröffnungen in einem seitlichen Bereich des Kabels angeordnet sind. Es hat sich erwiesen, dass in dieser Konstellation die Öffnungen vorzugsweise in einem seitlichen Umfangbereich des Kabels zwischen 30 und 150 Grad aus der vertikalen Achse gegen die Fahrbahn angeordnet werden. Da dieser laterale Bereich sich zwischen 30 und 150 Grad bzw. vorzugsweise zwischen 60 und 120 Grad um den querschnittlichen Umfang des Kabels vom oberen Bereich des Kabels erstreckt kann die Strahlung effizient gegen den Bahnverkehr gerichtet werden.

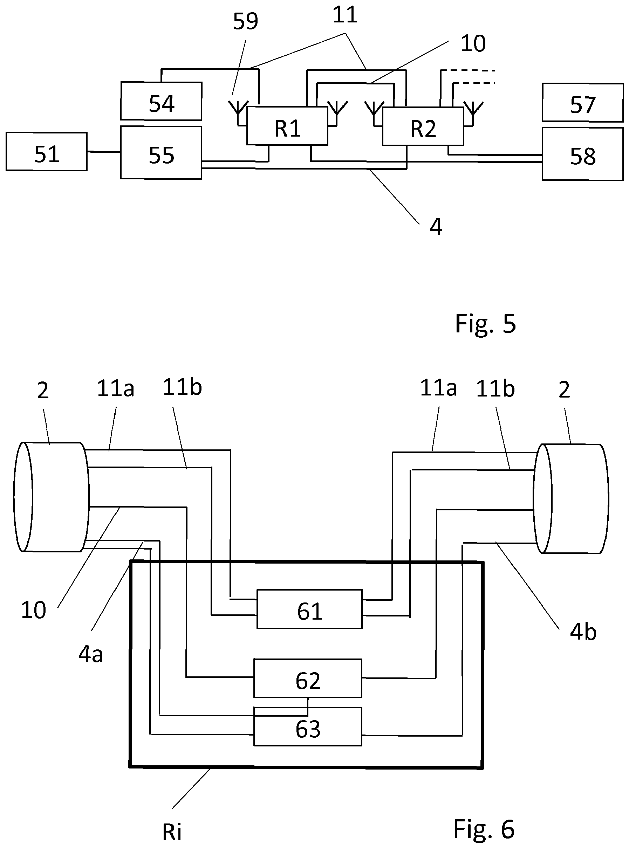

Am Beispiel der Fig. 5 wird nun aufgezeigt, wie ein erfindungsgemässes Telekommunikationssystem aufgebaut werden kann. Einer nicht dargestellten Bahnstrecke entlang wird ein strahlendes Telekommunikationskabel 1 in Segmenten von mehreren hundert Metern verlegt. An jedem Ende eines Segmentes wird ein Repeater Ri eingerichtet. Die Repeater Ri können an den Fahrleitungsmasten montiert werden und werden von mindestens einem Stromversorgungselement 11 des strahlenden Telekommunikationskabels 10 mit Strom gespeist. Beispielsweise können für die Stromversorgung zwei Kabel 11a, 11b mit einer Differenzialspannung von mehreren Hundert Volt (beispielsweise 600 bis 800 VDC) eingesetzt werden. Die Speisung der Repeater Ri kann z.B. über einen nichtdargestellten Converter von der o.g. höheren Spannung in eine tiefere Spannung (z.B. 48 VDC) umgewandelt werden. Das auf der Fig. 5 erfindungsgemässe Telekommunikationskabel 1 umfasst ein Strahlkabelsegment 10, im nichtdargestellten Rohr 5 verlegte Lichtwellenleiter 4, Stromversorgungselemente 11 und ein nichtdargestelltes Tragelement 6. Alle Komponenten können durch einen Mantel bzw. in einem umhüllenden oder einbettenden Extrusionskörper 2 als ein einheitliches, strahlendes Telekommunikationskabel 1 zusammengehalten werden.

Das strahlende Telekommunikationskabel 1 wird in den Schrank des Repeaters Ri geführt und dort abgesetzt. Somit wird auf Stecker- oder Muffenmontage in der Höhe, also auf Ebene der Fahrleitung verzichtet. Dank Absperrgittern zwischen Mast und Geleise können alle Arbeiten für Konfiguration und Wartung ausserhalb des Gefahrenbereichs ausgeführt werden. Die Schränke für die Repeater Ri können an den Fahrleitungsmasten oder eigens dafür errichteten Masten mit eigenem Tragwerk montiert werden. Sie enthalten einen Repeater Ri, ein Spleissbox für Lichtwellenleiter 4 und ggf. einen DC-DC Wandler für die Stromversorgung für allfällige Wartungsarbeiten. Zudem kann ein Pufferelement zur Stromversorgung des Repeaters vorhanden sein (beispielsweise ein Kondensator). Die Repeater Ri werden mittels des integrierten, strahlenden Telekommunikationskabels 1 verbunden. Das Ende eines Sektors wird mit einer Stromversorgungseinheit 54, 57 zur Produktion der Versorgungsspannung (z.B. 600 bis 800 VDC) für die Leistungselemente 11a und 11b ausgerüstet, zum Beispiel, und mit einer Basisstation 51 zur Hand des Strahlkabels 10 verbunden. Die mindestens eine Basisstation 51 stellt den installierten Funkdienst zur Verfügung. Jeder Repeater weist vorzugsweise eine intelligente Zuschaltvorrichtung auf, welche die elektrischen und/oder Funkfrequenz (RF) Lasteigenschaften überwacht und analysiert. Falls die Lasteigenschaften aus einem vorbestimmten Sollbereich ausweichen, so wird den Strom für den Repeater bzw. das Kommunikationssignal abgeschaltet. Beim Auffahren des Systems kann diese Zuschaltvorrichtungen auch den Aufbau der Stromversorgung über die Strecke ordentlich steuern, indem sie einen Repeater nur dann einschaltet, wann die Strom- und/oder RF-Lasteigenschaften sich stabilisiert haben. Die Zuschaltvorrichtung kann auch derart eingerichtet werden, dass sie den Strom an die weiteren Repeater nur durchschaltet, wenn die Lasteigenschaften der weiteren Repeater im erwarteten Sollbereich liegen. So kann die Last schrittweise aufgebaut werden, ohne dass zu hohe Einschaltströme entstehen. Bei einer MIMO-Ausführung werden Repeater vorzugsweise Paarweise installiert, wobei jedes Repeater-Paar vier Strahlkabelsegmente versorgen kann. Jedes Strahlkabelsegment erstreckt sich zwischen einem Repeater und dem nächsten, wobei jeder Repeater zwei sich in Gegenrichtungen erstreckende Strahlkabelsegmente versorgt.

Die Fig. 6 zeigt ein grobes Blockschema für einen Schrank. Zwei strahlende Telekommunikationskabel sind in den Schrank geführt und dort abgesetzt. Jedes strahlende Telekommunikationskabel umfasst im vorliegenden Fall einen Strahlkabel 10, zwei Stromleitungen 11a, 11b für die Stromversorgung, ein Rohr 5 für Lichtwellenleiter eine oder mehrere Lichtwellenleiter 4a/4b, die durch einen Mantel 2 zusammengehalten werden. Im Schrank des Repeaters Ri oder in seiner Nähe werden über ein Verbindungsmodul 61 die Stromleitungen 11a, 11b verbunden. Das Verbindungsmodul 61 kann zusätzlich einen Schalter für die automatische, galvanische Abtrennung im Falle eines Kurzschlusses, infolge eines Unfalls umfassen. Das Verbindungsmodul 61 umfasst zusätzlich einen Stromkonverter (600 bis 800 VDC auf 48 VDC) für die Versorgung der Verstärkungselektronik und kann zusätzlich einen Stromkonverter (600 bis 800V VDC auf 240 VAC) als Stromversorgung für Wartungsarbeiten in der Nähe des Repeaters Ri umfassen. Im Schrank des Repeaters Ri oder in seiner Nähe werden über ein Verbindungsmodul (Spleissbox) 63 die Lichtwellenleiter 4a, 4b terminiert, die Lichtwellenleiter 4a am Signalverstärkungsmodul 62 angeschlossen und die Lichtwellenleiter 4b mit einer weiteren Lichtwellenleiter 4b gespleisst. Am Ende eines Segmentes wird das Nutzsignal über eine optische Mastereinheit 55 an die Basisstation 51 übertragen.

### Referenzenverzeichnis

- 1: Strahlendes Telekommunikationskabel
- 2: Mantel
- 4: Lichtwellenleiter
- 5: Rohr, Leerrohr für Lichtwellenleiter (Speed Pipe)
- 6: Tragelement (Messenger, Stahlseil)
- 10: Strahlkabel (Standard Strahlkabel)
- 11: Stromversorgungselemente
- 21: Empfangspegel Systemgrenze
- 22: Minimalgeforderter Empfangspegel
- 23: Idealer Empfangspegel
- 24: Realer Empfangspegel mit grossen Schwankungen (Fading)
- 25: Hindernisse : a) Tunnel b) Gebauten c) Boden/Terrain
- 40: Schiene
- 41: Fahrleitungsmast
- 51: Basisstation (BTS)
- 54: Stromversorgungseinheit 1 z.B. 600 - 800 VDC
- 55: Optische Mastereinheit OMU-Einheit 1
- 57: Stromversorgungseinheit 2 z.B. 600 - 800 VDC
- 58: Optische Mastereinheit OMU-Einheit 2
- 59: Notantenne
- 61: Verbindungsmodul für Stromversorgung
- 62: Signalverstärkungsmodul
- 63: Verbindungsmodul für Lichtwellenleiter (Spleissbox)
- Ri: Leistungsverstärker (Repeater)

## Patentansprüche

1. Telekommunikationssystem für die Versorgung einer Verkehrsstrecke mit drahtlosem Daten- und/oder Sprachverbindungen zwischen Verkehrsteilnehmenden und einer entfernten Telekommunikationsinfrastruktur, das Telekommunikationssystem umfassend:
- eine Mehrzahl von längs der Verkehrsstrecke angeordneten Kabelsegmenten (1) zur drahtlosen Übertragung von Kommunikationssignalen an bzw. von den Verkehrsteilnehmenden,
- eine Mehrzahl von längs der Verkehrsstrecke angeordneten Weitergabe-Stationen, nachstehend Repeater (Ri) genannt, zur Versorgung der Kabelsegmente (1) mit den Kommunikationssignalen,
- mindestens ein Energiekabel (11) zur Versorgung der Repeater (Ri) mit elektrischer Energie,
- mindestens einen Lichtwellenleiter (4) zur Übertragung der Kommunikationssignale an die Repeater (Ri),
- mindestens eine optische Mastereinheit zur Übertragung der Kommunikationssignalen zwischen der Telekommunikationsinfrastruktur und mindestens einem ersten der Repeater (Ri) durch den mindestens einen Lichtwellenleiter (4),
**dadurch gekennzeichnet, dass** jedes der Kabelsegmente (1) sich zwischen zwei benachbarten Repeatern (Ri) erstreckt und mindestens die folgenden Komponenten umfasst:
- ein Rohr (5) zur Durchführung des mindestens einen Lichtwellenleiters (4) zwischen den benachbarten Repeatern (Ri),
- ein Strahlkabelsegment (10) zum drahtlosen Ausstrahlen und/oder Empfangen der genannten Kommunikationssignale,
- ein Energiekabelsegment (11) zur Übertragung der elektrischen Energie zwischen den benachbarten Repeatern (Ri), und
- ein Halteelement (2) zum Zusammenhalten der besagten Komponenten (5, 6, 10, 11).

2. Telekommunikationssystem gemäss Anspruch 1, wobei das Rohr (5) derart gebildet ist, dass der mindestens ein Lichtwellenleiter (4) zwischen den benachbarten Repeatern (Ri) durch das Rohr (5) geblasen werden kann.

3. Telekommunikationssystem gemäss Anspruch 1 oder 2, wobei der mindestens ein Lichtwellenleiter (4)
einen ersten Lichtwellenleiter (4) umfasst, welcher den ersten Repeater (R1) mit einer ersten optischen Mastereinheit (55) vernetzt, und
einen zweiten Lichtwellenleiter (4) umfasst, welcher den ersten Repeater (R1) mit einer zweiten, anderen optischen Mastereinheit (58) vernetzt.

4. Telekommunikationssystem gemäss Anspruch 3, wobei der mindestens ein Lichtwellenleiter (4)
einen dritten Lichtwellenleiter (4) umfasst, welcher einen zweiten Repeater (R2) mit der ersten optischen Mastereinheit (55) vernetzt, und
einen vierten Lichtwellenleiter umfasst, welcher den zweiten Repeater (R2) mit dem zweiten optischen Mastereinheit (58) vernetzt.

5. Telekommunikationssystem gemäss einem der vorgehenden Ansprüche, wobei
- das Kabelsegment (1) ein Tragelement (6) zur Verstärkung oder Versteifung des Kabelsegments (1) aufweist,
- das Strahlkabelsegment (10) eine Mehrzahl von länglichen Schlitzen aufweist,
- das Tragelement (6) in einem oberen Umlaufbereich des besagten Strahlkabelsegments (10) angeordnet ist, wobei das Strahlkabelsegment (10) vom Tragelement (6) suspendierbar ist, und
- die Schlitze in einem seitlichen Umlaufbereich des Strahlkabelsegments (10) angeordnet sind, welcher zwischen 30 und 150 Grad um den Umlauf des Strahlkabelsegments (10) vom besagten oberen Umlaufbereich liegen.

6. Telekommunikationssystem gemäss Anspruch 5, wobei der seitliche Umlaufbereich zwischen 60 und 120 Grad um den Umlauf des Strahlkabelsegments (10) vom oberen Umlaufbereich liegt.

7. Telekommunikationssystem gemäss einem der vorgehenden Ansprüche, wobei einer oder jeder der Mehrzahl von Repeatern (Ri) eine Stromüberwachungsvorrichtung zur selektiven Zuschaltung der elektrischen Energie für den besagten Repeater (Ri) aufweist, wobei die Stromüberwachungsvorrichtung eine Lastanalyseeinheit zur Analyse der elektrischen Lasteigenschaften des besagten Repeaters (Ri) und/oder mindestens eines am besagten Repeater (Ri) verbundenen Kabelsegments (1) aufweist, und wobei die Stromüberwachungsvorrichtung derart eingerichtet ist, dass sie den Strom nur dann an den Repeater (Ri) zuschaltet, wenn die Lasteigenschaften in einem ersten Sollbereich liegen.

8. Telekommunikationssystem gemäss einem der vorgehenden Ansprüche, wobei einer oder jeder der Mehrzahl von Repeatern (Ri) eine Signalüberwachungsvorrichtung zur selektiven Zuschaltung der Kommunikationssignale an ein am besagten Repeater (Ri) verbundenes Kabelsegment (1) aufweist, wobei die Signalüberwachungsvorrichtung eine Impedanzanalyseeinheit zur Analyse der dynamischen RF-Lasteigenschaften mindestens eines am besagten Repeater verbundenen Strahlkabelsegmente aufweist, und wobei die Signalüberwachungsvorrichtung derart eingerichtet ist, dass sie die Kommunikationssignale nur dann an das Strahlkabelsegment zuschaltet, wenn die RF-Lasteigenschaften in einem zweiten Sollbereich liegen.

9. Telekommunikationssystem gemäss einem der Ansprüche 7 oder 8, wobei das Telekommunikationssystem eine Meldeeinheit aufweist, mittels welcher, falls die Lastanalyseeinheit bzw. die Impedanzanalyseeinheit einen Fehler meldet, den Fehler und den Ort des Fehlers an eine Fernzentrale übermittelbar ist.

10. Telekommunikationssystem gemäss einem der vorgehenden Ansprüche, wobei die Verkehrsstrecke mindestens eine Teilstrecke aufweist, wo ein Anbringen der Strahlkabelsegmente (10) erschwert ist, bzw. wo ein Strahlkabelsegment (10) ausfällt, und wobei das Telekommunikationssystem mindestens eine Überbrückungsantenne umfasst, welche derart angeordnet ist, dass die besagten Übertragung der Kommunikationssignale auch entlang der Teilstrecke gewährt ist.

11. Telekommunikationssystem gemäss Anspruch 10, wobei die Teilstrecke von einer ersten Überbrückungsantenne an einem ersten Ende der Teilstrecke, und von einer zweiten Überbrückungsantenne an einem zweiten, von der ersten Ende entfernten Ende versorgt wird.

12. Telekommunikationssystem gemäss einem der Ansprüche 10 oder 11, wobei die mindestens eine Überbrückungsantenne über ein der Strahlkabelsegmente mit mindestens einem der Repeater (Ri) verbunden ist.

13. Telekommunikationssystem gemäss einem der vorgehenden Ansprüche, wobei das Halteelement (2) einen Extrusionskörper aufweist, welcher die besagten Komponenten des Kabelsegments (1) umschliesst.

14. Telekommunikationssystem gemäss Anspruch 13, wobei der Extrusionskörper aus einem polymerischen Material gebildet ist.

15. Telekommunikationssystem gemäss einem der vorgehenden Ansprüche, wobei die Telekommunikationssystem mindestens eine Basisstation (51) zur Verbindung des Telekommunikationssystems mit der entfernten Telekommunikationsinfrastruktur aufweist.

## Claims

1. Telecommunications system for providing a transport route with wireless data and/or speech connections between transport users and a remote telecommunications infrastructure, the telecommunications system comprising:
- a plurality of cable segments (1) arranged along the transport route for wireless transmission of communications signals to or from the passengers,
- a plurality of repeater stations, hereinafter referred to as repeaters (Ri), for providing the cable segments with the communications signals,
- at least one power cable (11) for supplying the repeaters (Ri) with electrical power,
- at least one optical conductor (4) for transmission of the communications signals to the repeaters (Ri),
- at least one optical master unit for the transmission of the communications signals between the telecommunications infrastructure and at least a first one of the repeaters Ri) via the at least one optical conductor (4),
**characterised in that** each of the cable segments (1) extends between two adjacent repeaters (Ri) and includes at least the following components:
- a conduit (5) for the passage of the at least one optical waveguide (4) between the adjacent repeaters (Ri),
- a radiating cable segment (10) for wireless transmission and/or reception of the said communications signals,
- a power cable segment (11) for conveying electrical the power between the adjacent repeaters (Ri), and
- a holding member for holding the said components (5, 6, 10, 11) together.

2. Telecommunications system according to claim 1, wherein the conduit (5) is formed in such a way that the at least one optical waveguide (4) can be blown through the conduit (5) between the adjacent repeaters (Ri).

3. Telecommunications system according to claim 1 or 2, wherein the at least one optical waveguide (4) comprises a first optical waveguide (4), which connects the first repeater (R1) to a first optical master unit (55), and a second optical waveguide (4) Connects the first repeater (RI) to a second, other optical master unit (58).

4. Telecommunications system according to claim 3, wherein the at least one optical waveguide (4) comprises a third optical waveguide (4) which connects a second repeater (R2) to the first optical master unit (55) and a fourth optical waveguide which connects the second repeater (R2) with the second optical master unit (58).

5. Telecommunications system according to one of the preceding claims, wherein:
- the cable segment (1) comprises a support element (6) for reinforcing or stiffening the cable segment (1),
- the radiating cable segment (10) comprises a plurality of elongate slits,
- the support element (6) is arranged in an upper circumferential region of the radiating cable segment (1), wherein the radiating cable segment can be suspended from the support element (6), and
- the slits are arranged in a lateral circumferential region of the beam cable segment (10) which is arranged between 30 and 150 degrees about the axis of the beam cable segment (10) Circulating the beam cable segment (10) from said upper circulating area.

6. Telecommunications system according to claim 5, wherein the lateral circumferential region lies between 60 and 120 degrees from the upper circumferential region about the circumference of the radiating cable segment (10).

7. Telecommunications system according to one of the preceding claims, wherein one or each of the plurality of repeaters (Ri) comprises a current monitoring device for selectively connecting the electrical power for the said repeater (Ri), the current monitoring device comprising a load analysis unit for analysing the electrical load characteristics of said repeater (Ri) and/or of at least one cable segment (1) connected to the said repeater (Ri), and wherein the current monitoring device is arranged such that it connects the power to the repeater (Ri) only when the load characteristics are within a first specified range.

8. Telecommunications system according to one of the preceding claims, wherein one or each of the plurality of repeaters (Ri) comprises a signal monitoring device for selectively connecting the communications signals to a cable segment (1) connected to the said repeater (Ri), the signal monitoring device comprising an impedance analysis unit for analysing the dynamic RF load characteristics of at least one radiating cable segment connected to the said repeater, and wherein the signal monitoring device is arranged to connect the communications signals to the radiating cable segment only when the RF load characteristics lie in a second specified range.

9. Telecommunications system according to one of claims 7 or 8, wherein the telecommunications system comprises a reporting unit by means of which, if the load analysis unit or the impedance analysis unit reports an error, the error and the location of the error can be transmitted to a remote centre.

10. Telecommunications system according to one of the preceding claims, wherein the transport route comprises at least one route section where fitting of the radiating cable segments (10) is hindered, or where a radiating cable segment (10) fails, and wherein the telecommunications system comprises at least one bridging antenna which is arranged so as to maintain the said transmission of the communications signals also along the route section.

11. Telecommunications system according to claim 10, wherein the route section is served by a first bridging antenna at a first end of the route section and a second bridging antenna at a second end, remote from the first end.

12. Telecommunications system according to one of claims 10 or 11, wherein the at least one bridging antenna is connected to at least one of the repeaters (Ri) via at least one of the radiating cable segments.

13. Telecommunications system according to one of the preceding claims, the holding element (2) comprising an extruded body enclosing the said components of the cable segment (1).

14. Telecommunications system according to claim 13, wherein the extrusion is of a polymeric material.

15. Telecommunications system according to one of the preceding claims, the telecommunications system comprising at least one base station (51) for connecting the telecommunications system to the remote telecommunications infrastructure.

## Revendications

1. Système de télécommunications pour fournir, sans fil, une voie de transport avec des connexions de données et/ou vocales entre des usagers de transport et une infrastructure distante de télécommunication, le système de télécommunications comprenant:
- une pluralité de segments de câble (1) disposées le long de la voie de transport pour la transmission sans fil de signaux de communications vers et depuis les les usagers de transport,
- une pluralité de stations relais disposées le long de la voie de transport, ci-après appelées repeaters (Ri), pour alimenter les segments de câble (1) avec les signaux de communications,
- au moins un câble d'alimentation (11) pour alimenter les repeaters (Ri) en énergie électrique,
- au moins un guide d'onde optique (4) pour la transmission des signaux de communications vers les repeaters (Ri),
- au moins une unité maître optique pour la transmission des signaux de communications entre l'infrastructure de télécommunications et au moins un premier des repeaters (Ri) par ledit au moins un guide d'onde optique (4),
**caractérisé en ce que** chacun desdits segments de câble (1) s'étend entre deux repeaters adjacents (Ri) et comprend au moins les composants suivants:
- un tube (5) pour le passage du au moins un guide d'onde optique (4) entre les repeaters adjacents,
- un segment de câble rayonnant (10) pour l'émission et/ou réception, sans fil, desdits signaux de communications,
- un segment de câble d'alimentation (11) pour la transmission d'énergie électrique entre les repeaters adjacents (Ri), et
- un élément de support (2) pour tenir ensemble lesdits composants (5, 6, 10, 11).

2. Système de télécommunications selon la revendication 1, dans lequel le tube (5) est formé de telle manière que le au moins un guide d'onde optique (4) puisse être soufflé entre les repeaters adjacents (Ri) à travers du tube (5).

3. Système de télécommunications selon la revendication 1 ou 2, dans lequel le au moins un guide d'onde optique (4) comprend
un premier guide d'onde optique (4), qui relie le premier repeater (R1) à une première unité maître optique (55), et
un deuxième guide d'onde optique (4), qui relie le premier repeater (R1) à une seconde, autre unité maître optique (58).

4. Système de télécommunications selon la revendication 3, dans lequel le au moins un guide d'onde optique (4) comprend
un troisième guide d'onde optique (4) qui relie un deuxième repeater (R2) à la première unité maître optique (55), et
un quatrième guide d'onde optique, qui relie le deuxième repeater (R2) à la seconde unité maître optique (58).

5. Système de télécommunications selon l'une des revendications précédentes, dans lequel
- le segment de câble (1) comprend un élément de support (6) pour le renforcement ou raidissement du segment de câble (1),
- le segment de câble rayonnant (10) comprend une pluralité de fentes allongées,
- l'élément de support est disposé dans une région circonférentielle supérieure dudit segment de câble rayonnant, tel que le segment de câble rayonnant est soutenable par l'élément de support, et
- les fentes sont situées dans une région circonférentielle latérale du segment de câble rayonnant (10), la région se trouvant entre 30 et 150 degrés autour de la circonférence du segment de câble rayonnant (10) à partir de ladite région circonférentielle supérieure.

6. Système de télécommunications selon la revendication 5, dans lequel la région circonférentielle latérale est située entre 60 et 120 degrés autour de la circonférence du segment de câble rayonnant (10) à partir de ladite région circonférentielle supérieure.

7. Système de télécommunications selon l'une des revendications précédentes, dans lequel l'un ou chacun de la pluralité de repeaters (Ri) comprend une unité de surveillance du courant pour le raccordement sélectif de la puissance électrique pour ledit repeater (Ri), l'unité de surveillance du courant comprenant une unité d'analyse de charge pour analyser les caractéristiques de la charge électrique dudit repeater (Ri) et/ou d'au moins un segment de câble (1) relié audit repeater (Ri), et dans lequel l'unité de surveillance de courant est adaptée de telle manière qu'elle ne raccorde le courant au repeater (Ri) que si les caractéristiques de la charge sont comprises dans une première plage de consigne.

8. Système de télécommunications selon l'une des revendications précédentes, dans lequel l'un ou chacun de la pluralité de repeaters (Ri) comprend une unité de surveillance de signal pour le raccordement sélectif des signaux de communication à un segment de câble (1) raccordé audit repeater (Ri), l'unité de surveillance de signal comprenant une unité d'analyse d'impédance pour analyser les caractéristiques dynamiques de la charge RF d'au moins un segment de câble rayonnant raccordé audit repeater (Ri), et dans lequel l'unité de surveillance de signal est adaptée de telle sorte qu'elle ne raccorde les signaux de communication au segment de câble rayonnant que si les caractéristiques de charge RF sont comprises dans une deuxième plage de consigne.

9. Système de télécommunications selon l'une des revendications 7 ou 8, dans lequel le système de télécommunications comprend une unité de signalisation par laquelle, si l'unité d'analyse de charge ou l'unité d'analyse d'impédance signale une erreur, l'erreur et l'emplacement de l'erreur peuvent être transmis à un centre de contrôle à distance.

10. Système de télécommunications selon l'une des revendications précédentes, dans lequel la voie de transport comprend au moins une partie où la fixation des segments de câble rayonnant (10) est empêchée, ou où un segment de câble rayonnant (10) fait défaillance, et dans lequel le système de télécommunications comprend au moins une antenne de pontage qui est disposée tel que ladite transmission des signaux de communication est aussi fournie le long de la partie de la voie.

11. Système de télécommunications selon la revendication 10, dans lequel la partie de la voie est alimentée par une première antenne de pontage située à une première extrémité de la jambe, et par une deuxième antenne de pontage située à une deuxième extrémité, éloignée de la première extrémité.

12. Système de télécommunications selon l'une des revendications 10 ou 11, dans lequel l'au moins une antenne de pontage est reliée à au moins un des repeater (Ri) par un des segments de câble rayonnant.

13. Système de télécommunications selon l'une des revendications précédentes, dans lequel l'élément de support (2) comprend un corps d'extrusion qui entoure lesdits composant du segment de câble (1).

14. Système de télécommunications selon la revendication 13, dans lequel le corps d'extrusion est formée d'un matériau polymère.

15. Système de télécommunications selon l'une des revendications précédentes, dans lequel le système de télécommunications comprend au moins une station de base (51) pour connecter le système de télécommunications à l'infrastructure de télécommunications.
